# FASCICULE DE BREVET EUROPEEN

(11) **EP 2 193 942 B1**
(45) Date de publication et mention de la délivrance du brevet: **29.06.2011**
(21) Numéro de dépôt: 08170741.6
(22) Date de dépôt: 04.12.2008
(51) Int. Cl.: B60H 1/00

(54) **Boîtier de commande muni d'un système de verrouillage pour un arbre de commande**
Schaltgehäuse, das mit einem Verriegelungssystem für eine Antriebswelle ausgestattet ist
Control box equipped with a locking system for a control shaft

(43) Date de publication de la demande: 09.06.2010
(73) Titulaire: Delphi Technologies, Inc., Troy, Michigan 48007 (US)
(72) Inventeur: Isquierdo, Vincent, 67115 Plobsheim (FR); Cailloux, Robin, 67100 Strasbourg (FR)
(74) Mandataire: Robert, Vincent

(56) Documents cités:
- EP-A- 1 340 633
- EP-A- 1 428 699
- US-A- 5 281 049
- US-A- 5 583 327

## Description

### DOMAINE TECHNIQUE

La présente invention est relative au montage d'éléments d'un boîtier de commande, notamment pour un système d'air conditionné de véhicule, automobile.

### ETAT DE LA TECHNIQUE ANTERIEURE

Un boitier de commande de système d'air conditionné automobile dispose d'une façade de style faisant fonction d'interface utilisateur et comprenant au moins un bouton de réglage, température, vitesse et direction de l'air. La façade de style est fixée sur un panneau intermédiaire, lui-même fixé sur un socle. Des arbres de commandes correspondants aux différents réglages possibles traversent. Chaque bouton de réglage étant accouplé avec un arbre de commande lui correspondant.

L'assemblage du boitier s'effectue par étapes dont la première est l'approche perpendiculaire puis la fixation de la façade de style, pré-équipée des boutons de réglage, sur le panneau intermédiaire. Ensuite, l'ensemble ainsi constitué est monté « en aveugle » sur le socle. Il est primordial qu'au cours du montage les arbres ne tournent pas, de sorte que les boutons de réglages s'accouplent tous, de manière angulairement exacte, avec l'arbre de commande qui leur correspond.

Il est d'usage que le monteur positionne les arbres puis approche délicatement l'ensemble façade de style/panneau intermédiaire ; s'il perçoit la moindre rotation d'un arbre avant l'accouplement avec un bouton de réglage, l'opérateur s'interrompt pour repositionner l'arbre. Ce procédé présente des risques de mauvais positionnement et reste long car l'opérateur attentif est plus lent.

Il se peut que l'opérateur dispose d'un outil spécial de montage qu'il retire juste avant la fixation de la façade de style. Dans ce cas, l'outil, spécial usine, est très cher et, ne restant pas sur le véhicule, une maintenance ultérieure du véhicule est délicate car l'opérateur de maintenance remontera le boitier sans outil.

EP 1340633 divulgue un boitier de commande selon le préambule de la revendication 1.

Pour assurer la qualité de l'opération de montage et réduire les coûts associés, il est essentiel de résoudre simplement les problèmes d'immobilité des arbres, en cours du montage, et de liberté de rotation, au terme du montage, que cela soit lors du montage initial ou bien en maintenance. L'objet de la présente invention est de résoudre ces problèmes.

### RESUME DE L'INVENTION

L'invention propose un boitier de commande, notamment pour un système d'air conditionné de véhicule, comprenant un socle, un panneau intermédiaire et une façade de style. Respectivement, un arbre intérieur, un arbre intermédiaire et un arbre extérieur constituent une ligne d'arbres tournants traversant depuis le socle jusqu'à la façade de style où est montée en bout de ligne une molette servant à la manipulation. Avantageusement, dans le but assigné à l'invention, l'arbre intérieur et l'arbre intermédiaire sont, avant le montage, immobilisés en des positions angulaires déterminées, par un premier et un second dispositif de verrouillage solidaire respectivement du socle et du panneau intermédiaire. En fin de montage, lorsque les arbres sont engrenés, les arbres sont automatiquement libérés. Une première came de déverrouillage fixée sr le socle actionne et commute le dispositif de verrouillage de l'arbre intermédiaire. Symétriquement et en quasi-simultané, une seconde came de déverrouillage fixée sur le panneau intermédiaire actionne et commute le dispositif de verrouillage de l'arbre intérieur.

Selon d'autres caractéristiques de l'invention chaque dispositif de verrouillage comprend un index d'encliquetage sollicité élastiquement par un élément élastique vers l'état verrouillé, état dans lequel l'index d'encliquetage est engagé dans un logement, prévu à cet effet, de l'arbre qu'il immobilise. L'élément élastique est du type lame souple ou bras allongé droit ou courbé souple. Il sollicite l'index vers une position angulaire correspondant à un état verrouillé du dispositif.

De plus, chaque dispositif de verrouillage comprend, outre l'index et l'élément élastique, un moyen de coopération avec la came de déverrouillage qui lui est propre.

Avantageusement, chaque dispositif de verrouillage est réalisé en une pièce et peut être moulé en un plastique amorphe ce qui lui confère de bonnes propriétés mécaniques en termes de souplesse et d'élasticité. Ainsi, l'élément élastique travaille en permanence à l'intérieur de son domaine d'élasticité, sans altération de ses propriétés, et bénéficie donc d'une grande endurance.

### DESCRIPTION DES FIGURES

La figure 1 est une vue d'ensemble éclatée présentant l'agencement des composants du boitier selon l'invention.
La figure 2 est une vue d'ensemble, en coupe de profil, avant montage.
La figure 3 est une vue d'ensemble, en coupe de profil, en fin de montage.
La figure 4 est une vue en perspective du dispositif de verrouillage linéaire en position verrouillée V1.
La figure 5 est une vue en perspective du dispositif de verrouillage linéaire en position déverrouillée D1.
La figure 6 est une vue de dessus du dispositif de verrouillage rotatif en position verrouillé V2.
La figure 7 est une vue de dessus du dispositif de verrouillage rotatif en position déverrouillé D2.
La figure 8 est une vue en perspective du dispositif de verrouillage rotatif en position verrouillé V2.
La figure 9 est une vue en perspective du dispositif de verrouillage rotatif en position déverrouillé D2.

### DESCRIPTION DES MODES DE REALISATION PREFERES

L'invention est maintenant décrite au travers d'un exemple en faisant référence aux figures.

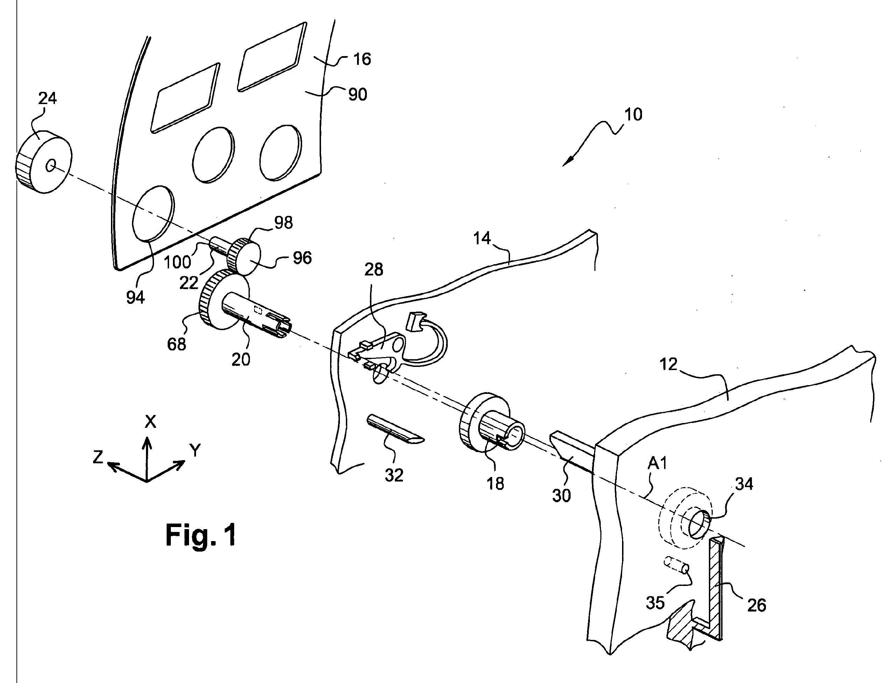

La description se repère, à titre non limitatif, dans un système d'axes orthonormés X-Y-Z, tel que l'axe de montage Z est orienté depuis « l'intérieur » vers « l'extérieur » tel que représenté sur la figure 1.

Un boitier de commande 10 d'un système d'air conditionné de véhicule à commande mécanique (non représentée) comprend, de l'intérieur vers l'extérieur suivant l'axe de montage Z, l'empilement d'un socle 12, d'un panneau intermédiaire 14, et d'une façade de style 16, tous trois sensiblement parallèles au plan principal X-Y..

Le boitier de commande 10 est également pourvu de trois arbres 18, 20, 22 orientés perpendiculairement au plan principal X-Y et s'étendant suivant des axes propres parallèles, à l'axe de montage Z, et coopérant ensemble en rotation, L'arbre intérieur 18, actionne la commande mécanique, et est monté tournant par rapport au socle 12. L'arbre intermédiaire 20 est monté tournant par rapport au panneau intermédiaire 14. L'arbre extérieur 22 est monté tournant par rapport à la façade de style 16. L'arbre extérieur 22 se termine par une molette 24 manipulable par un utilisateur.

De plus, dans le but de faciliter l'assemblage, le boitier de commande 10 est avantageusement pourvu de deux dispositifs de verrouillage, un linéaire 26 et un rotatif 28, respectivement agencés sur le socle 12 et sur le panneau intermédiaire 14. Le dispositif de verrouillage linéaire 26 immobilise l'arbre intérieur 18 en une position angulaire déterminée, avant et pendant l'assemblage. Cette immobilisation correspond à un état verrouillé V1. Le dispositif de verrouillage rotatif 28 immobilise l'arbre intermédiaire 20 en une position angulaire déterminée, avant et pendant l'assemblage. Cette immobilisation correspond à un état verrouillé V2.

Le boitier de commande 10 est, de plus, pourvu d'une première came de déverrouillage 30 et d'une seconde came de déverrouillage 32 coopérant respectivement avec les dispositifs de verrouillage rotatif 28 et linéaire 26. La première came 30 est agencée sur le socle 12, en regard du, et coopérant avec, le dispositif rotatif 28. La seconde came 32 est agencée sur le panneau intermédiaire 14 en regard du, et coopérant avec, le dispositif de verrouillage linéaire 26. En fin d'assemblage, les cames de déverrouillage 30, 32 libèrent respectivement l'arbre intermédiaire 20 et l'arbre intérieur 18 en imposant une commutation des états verrouillés V2, V1 vers des états déverrouillés D2, D1.

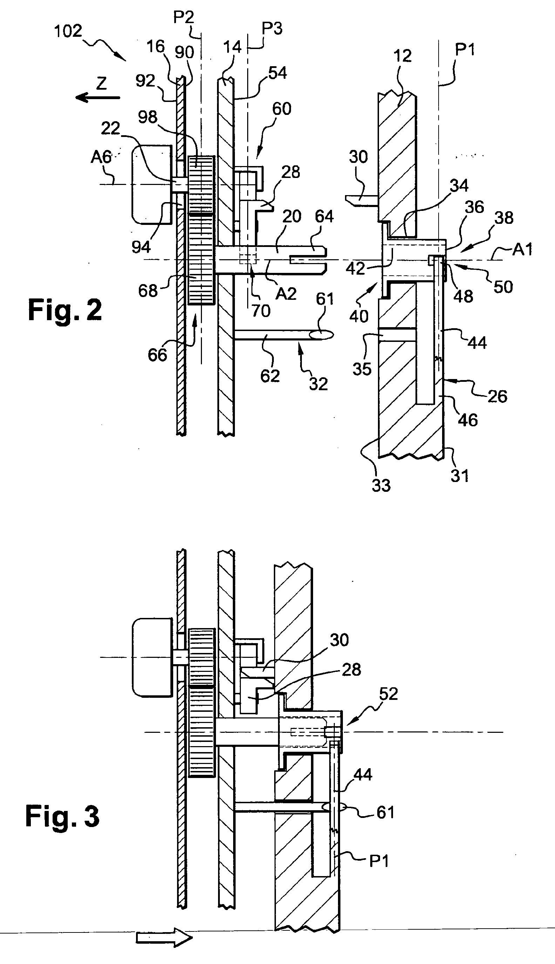

Les figures 2 à 9 détaillent plus avant la structure du boitier de commande 10 et de ses composants.

Le socle 12 a une face arrière 31 et une face avant 33, il est pourvu d'un premier alésage 34 traversant suivant un premier axe A1 parallèle à l'axe de montage Z, et à l'intérieur duquel est monté en rotation l'arbre intérieur 18.

L'arbre intérieur 18 s'étend axialement suivant le premier axe A1, depuis une première extrémité arrière 36 située du côté et émergeant de la face arrière 31 jusqu'à une seconde extrémité 40 affleurant avec la face avant 33 du socle 12. La première extrémité 36 est pourvue d'un cran 52 situé dans un premier plan P1 parallèle au plan principal X-Y. La seconde extrémité 40 est pourvue d'un alésage axial 42 cannelé, suivant le premier axe A1, et destiné à l'accouplement suivant le premier axe A1 avec l'arbre intermédiaire 20.

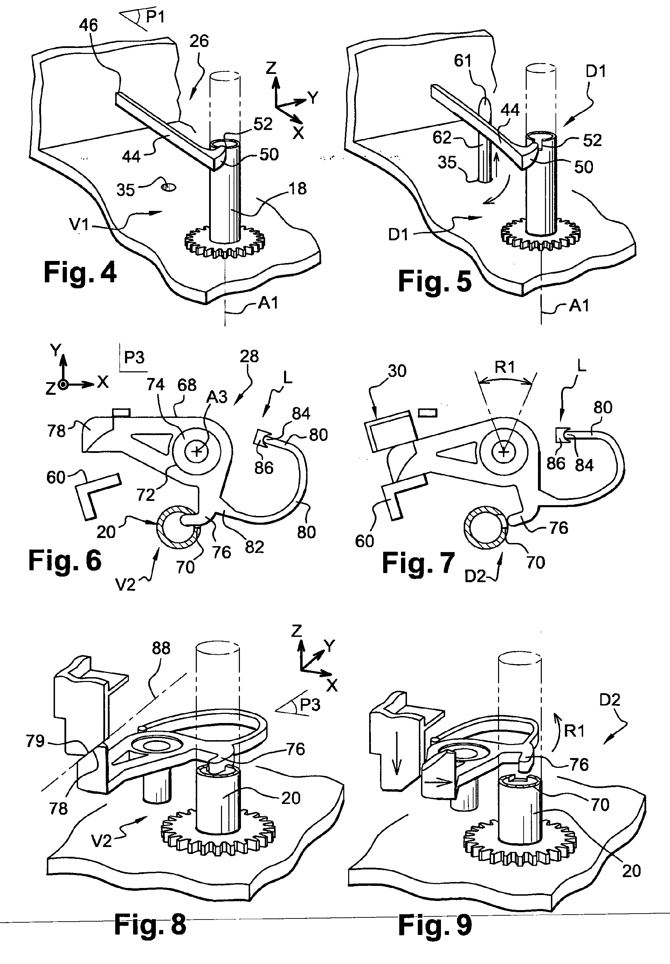

Sur sa face arrière 31, le socle 12 est également pourvu du dispositif de verrouillage linéaire 26, particulièrement détaillé par les figures 4 et 5, et destiné à immobiliser en rotation l'arbre intérieur 18 avant et pendant l'assemblage du boitier de commande 10 en l'état verrouillé V1. Le dispositif de verrouillage linéaire 26 comprend une lame élastique 44 droite fixée au socle 12 par une première extrémité 46 et s'étendant dans le premier plan P1, jusqu'à une seconde extrémité 48 pourvue d'un index 50 pouvant s'engager dans le cran 52. Lorsque l'index 50 est engagé dans le cran 52, l'arbre intérieur 18 est immobilisé en l'état verrouillé V1. La fixation de la première extrémité 46 de la lame élastique 44 sur le socle 12 peut être réalisée de plusieurs manières, notamment la lame élastique 44 peut être une partie intégrante du socle 12 particulièrement dans le cas où le socle 12 et la lame 44 sont en plastique moulé.

Le socle 12 est pourvu de la première came 30 de déverrouillage décrite plus avant.

Le socle 12 est également pourvu d'un second alésage 35 dont l'axe, parallèle au premier axe A1, coupe le premier plan P1 sensiblement au milieu de la lame élastique 44.

Le panneau intermédiaire 14 a une face intérieure 54 en regard du socle 12 et une face extérieure 56 opposée. Le panneau intermédiaire 14 est pourvu d'un alésage 58 traversant suivant d'un second axe A2, parallèle à l'axe de montage Z, à l'intérieur duquel est monté en rotation l'arbre intermédiaire 20. La face intérieure 54 est pourvue de la seconde came 32 de déverrouillage et d'une butée 60 saillante de la face intérieure 54.

La seconde came 32 de déverrouillage est agencée au bout d'un support droit 62 fixé sur la face intérieure 54 et s'en étendant perpendiculairement en direction du socle 12. La seconde came 32 est positionnée en vis-à-vis du second alésage 35 en regard de la lame élastique 44, sensiblement en son milieu. La seconde came 32 présente une surface biseautée 61, sensiblement à 45°. Lors de l'assemblage du panneau intermédiaire 14, la surface biseautée 61, de la came 32 de déverrouillage agencée au bout du support droit 62, passe au travers du second alésage 35 du socle 12, puis entre en contact avec la lame élastique 44 appuie dessus et l'écarte dans le premier plan P1 dégageant par là-même l'index 50 du cran 52, libérant ainsi l'arbre intérieur 18.

L'arbre intermédiaire 20 s'étend axialement suivant le second axe A2 depuis une première extrémité mâle cannelée 64, émergeant de la face intérieure 54, jusqu'à une seconde extrémité 66 émergeant de la face extérieure 56 et pourvue d'une première roue dentée 68 comprise dans un second plan P2 parallèle au plan principal X-Y. La première extrémité mâle cannelée 64 est ajustée pour s'accoupler dans l'alésage axial cannelé 42 de l'arbre intérieur 18 afin de lier en rotation de l'arbre intérieur 18 et l'arbre intermédiaire 20. Cet accouplement rend coaxiaux les premier et second axes A1, A2.

A proximité de sa première extrémité 64, l'arbre intermédiaire 20 est pourvu d'un logement creux 70 situé à la surface de l'arbre intermédiaire 20.

Le panneau intermédiaire 14 est également pourvu sur sa face intérieure 54 du dispositif de verrouillage rotatif 28, plus particulièrement détaillé par les figures 6 à 9, et destiné à immobiliser en rotation l'arbre intermédiaire 20 en l'état verrouillé V2, avant et pendant l'assemblage du boitier de commande 10.

Le dispositif de verrouillage rotatif 28 est plan et compris dans un troisième plan P3 parallèle au plan principal X-Y. Il comprend une platine 68 pourvue, sensiblement en son centre, d'un alésage cylindrique 72 suivant un troisième axe A3 perpendiculaire au troisième plan P3. Symétriquement, la face intérieure 54 du panneau intermédiaire 14 est pourvue d'un cylindre mâle 74 suivant un quatrième axe A4, parallèle à l'axe de montage Z, ajusté à l'alésage 72 de la platine 68. Le cylindre 74 et l'alésage 72 assemblés, les troisième et quatrième axe A3 A4 étant coaxiaux, coopèrent en une première rotation R1 d'axe de rotation A3-A4.Un moyen de retenu axial (non représenté) est prévu pour maintenir la platine 68 sur le cylindre mâle 74, ainsi, la première rotation R1 est l'unique degré de liberté dont dispose la platine 68 par rapport au panneau intermédiaire 14.

Agencé et fixé au pourtour de la platine 68, le dispositif de verrouillage rotatif 28 comprend un ergot d'encliquetage 76, une surface d'appui 78, et un élément élastique 80 sollicitant élastiquement la platine 68 suivant la première rotation R1 vers la position angulaire correspondant à l'état verrouillé V2.

Lorsque l'ergot d'encliquetage 76 est engagé dans le logement creux 70, l'arbre intermédiaire 20 est immobilisé en l'état verrouillé V2.

L'élément élastique est un bras souple 80 recourbé et s'étendant dans le troisième plan P3, depuis une première extrémité 82, liée à la platine 68, jusqu'à une seconde extrémité 84 en appui ponctuel au fond d'une butée en U 86 fixée à la face intérieure 54. C'est-à-dire qu'en partant de la première extrémité 82, le bras souple s'éloigne de la platine 68 puis revient vers la platine 68 en formant un U jusqu'à sa seconde extrémité 84 appuyée au fond de la butée en U 86. L'extrémité 84 dispose, par rapport à la butée en U 86, d'une liberté de mouvement, cette liaison mobile L pouvant s'apparenter à une seconde rotation ou un pivotement.

Ceci permet à la fois d'obtenir un effort de rappel élastique en diminuant l'écart entre les branches du U, de répartir les efforts sur l'ensemble du bras, et enfin de minimiser l'encombrement du dispositif de verrouillage 28 dans le plan P3. La liaison L permet avantageusement de minimiser les contraintes internes au bras souple 80. Ainsi, lorsque la platine 68 tourne suivant la première rotation R1, l'élément élastique suit le mouvement et ne se comporte pas suivant le modèle d'une poutre encastrée.

D'autres modes de réalisation de la liaison mobile L entre l'extrémité 84 et la face intérieure 54 sont envisageables. Par exemple, à l'instar de la première rotation R1, un anneau solidaire de la seconde extrémité 84 pourrait être monté ajusté autour d'un cylindre mâle positionné en lieu et place de la butée en U 86.

La surface d'appui 78 et la première came de déverrouillage 30 coopèrent pour commander les commutations d'états V2, D2 du dispositif de verrouillage rotatif 28.

Le dispositif de verrouillage rotatif 28 est réalisé d'une seule pièce et est avantageusement moulé en un plastique amorphe ce qui lui assure une fiabilité importante. Notamment, le bras souple 80 se déforme élastiquement, lors des commutations d'états V2 D2, et travaille en demeurant toujours à l'intérieur de son domaine d'élasticité. Ainsi il ne subit aucune déformation permanente et peut être utilisé plusieurs fois à l'occasion de montages et démontages successifs du boitier de commande 10.

La première came 30 est fixée sur le socle 12 et s'en étend perpendiculairement en direction du panneau intermédiaire 14. Elle est positionnée en vis-à-vis de la surface d'appui 78 du dispositif de verrouillage rotatif 28 et lui présente une surface de commande 79. Comme illustré par les figures 8 et 9, les deux surfaces, de commande 79 et d'appui 78, sont biseautées suivant un même plan incliné 88 orienté sensiblement à 45° par rapport à l'axe de montage Z de sorte que le contact des surface se fasse suivant ce plan incliné 88. Ainsi lors du montage du panneau intermédiaire 14 sur le socle 12, la surface de commande 79 appuie sur la surface d'appui 78 et la repousse dans le troisième plan P3, faisant tourner la platine 68 suivant la première rotation R1 et dégageant par là même l'ergot 76 du logement creux 70, libérant l'arbre intermédiaire 20.

En l'état déverrouillé D2, la première rotation R1 de la platine 68 est limitée par la butée 60 agencée sur la face intérieure 54 du panneau intermédiaire 14.

La façade de style 16 comprend un côté intérieur 90 en regard du panneau intermédiaire 14, et un côté extérieur 92, accessible à un utilisateur. La façade de style 16 est pourvue d'un alésage 94 traversant suivant un sixième axe A6 parallèle à l'axe de montage Z. L'arbre extérieur 22 est monté en rotation à l'intérieur de l'alésage 94.

L'arbre extérieur 22 s'étend axialement suivant le sixième axe A6, depuis une première extrémité intérieure 96, comprenant une seconde roue dentée 98 comprise dans le second plan P2, jusqu'à une seconde extrémité 100 où est agencée la molette 24.

Le fonctionnement de l'invention est maintenant décrit au travers des de la description de l'assemblage du boitier de commande 10, qui comprend les étapes suivantes.

Monter sur le socle 12 l'arbre intérieur 18, le positionner et le verrouiller à l'aide du dispositif de verrouillage linéaire 26, ce qui correspond à l'état verrouillé V1.

Monter sur le panneau intermédiaire 14 le dispositif de verrouillage rotatif 28 et l'arbre intermédiaire 20.

Positionner l'arbre intermédiaire. 20 dans la position angulaire.de montage souhaite.

Verrouiller dans cette position, à l'aide du dispositif rotatif 28, ce qui correspond à l'état verrouillé V2.

Monter sur la façade de style 16 l'arbre extérieur 22 et la molette 24.

Positionner l'arbre extérieur 22 dans la position angulaire de montage.

Assembler la façade de style 16 pré-équipée sur le panneau intermédiaire 14 également pré-équipé et former ainsi l'ensemble extérieur 102. Lors de cette étape la façade de style 16 est approchée suivant l'axe de montage Z et est fixée au panneau intermédiaire 14, les roues dentées 68, 98 s'engrènent assurant la coopération en rotation de l'arbre extérieur 22 et de l'arbre intermédiaire 20 qui reste verrouillé.

Assembler l'ensemble extérieur 102 sur le socle 12 pré-équipé. Pour ce faire, l'ensemble extérieur 102 est approché suivant l'axe de montage Z, l'arbre intermédiaire 20 et l'arbre intérieur 18 s'engrènent suivant la position angulaire de montage. En poursuivant le mouvement d'approche suivant l'axe de montage Z, les première et seconde cames de déverrouillages 30, 32 viennent respectivement en contact des dispositifs de verrouillage rotatif 28 et linéaire 26 puis coopèrent avec eux résultant en la commutation des états verrouillés V2, V1 en états déverrouillés D2, D1 libérant, quasi simultanément, les arbres intermédiaire 20 et intérieur 18.

Finaliser le positionnement et fixer l'ensemble extérieur 102.

Pour désassembler le boitier de commande 10 il suffit de suivre en sens inverse les étapes précédentes.

La structure ci-dessus décrite détaille un mode spécifique de réalisation. L'homme du métier saura sans difficulté adapter les enseignements de la présente invention à d'autres modes de réalisation. Ainsi les dispositifs de verrouillage peuvent être tous deux de même type, linéaire ou rotatif, voire inversé par rapport à l'exemple décrit. Les trois arbres peuvent coopérer suivant d'autres modes que l'emboitement ou l'engrenage. La rotation R1 et la liaison L peuvent être réalisées par d'autres moyens, voire la rotation R1 peut être remplacée par une translation. Les géométries des surfaces des cames et d'appui peuvent être différentes telles, par exemple, un biseau et une surface bombée. Le socle le panneau intermédiaire et la surface de style sont décrits comme étant substantiellement plan. D'autres géométries existent.

## Revendications

1. Boitier de commande (10), notamment pour un système d'air conditionné de véhicule comprenant un premier panneau (12) et un second panneau (14) s'assemblant suivant un axe de montage (Z) le premier panneau étant pourvu d'un premier arbre (18) le second panneau (14) étant pourvu d'un second arbre (20) le premier arbre (18) et le second arbre (20) étant, après assemblage du premier panneau (12) et du second panneau (14), liés en rotation, **caractérisé en ce que**
le second panneau (14) est pourvu d'un dispositif de verrouillage (26, 28) immobilisant avant et durant l'assemblage, en un état verrouillé (V1, V2), le second arbre (20), en une position angulaire déterminée, le dispositif de verrouillage (26, 28) pouvant être commuté en un état déverrouillé (D1, D2) dans lequel le second arbre (20) est libéré, et **en ce que**
le premier panneau (12) est pourvu d'un dispositif de déverrouillage (30, 32) coopérant avec le dispositif de verrouillage (26, 28) en vue de le faire commuter de l'état verrouillé (V1, V2) à l'état déverrouillé (D1, D2), la coopération s'effectuant lors de l'assemblage du premier panneau (12) et du second panneau (14).

2. Boitier de commande (10) suivant la revendication 1 **caractérisé en ce que** le dispositif de verrouillage (26, 28) comprend un ergot d'encliquetage (50, 76) sollicité élastiquement par un élément élastique (44, 80) vers l'état verrouillé (V1, V2) dans lequel l'ergot d'encliquetage (50, 76) est engagé dans un logement (52, 70) approprié du second arbre (20) pour l'immobiliser.

3. Boitier de commande (10) suivant la revendication 2 **caractérisé en ce que** l'ergot d'encliquetage (76) est monté, par rapport au second panneau (14), suivant une première rotation (R1) autour d'un axe de verrouillage (A3) sensiblement parallèle à l'axe de montage (Z), entre une première position angulaire de verrouillage et une seconde position angulaire de déverrouillage correspondants respectivement aux états de verrouillage (V2) et de déverrouillage (D2) du dispositif de verrouillage (28).

4. Boitier de commande (10) suivant une quelconque des revendications 2 ou 3 **caractérisé en ce que** l'élément élastique est un bras souple allongé (80) qui travaille en flexion par rapport au second panneau (14) dans n plan sensiblement orthogonal à l'axe de montage (Z).

5. Boitier de commande (10) suivant l'une quelconque des revendications précédentes **caractérisé en ce que** le dispositif de déverrouillage est une première came (30) pourvue d'une surface de commande (79) qui est prévue pour coopérer avec une surface d'appui (78) associée du dispositif de verrouillage (28) en vue de faire commuter le dispositif de verrouillage (28) de son état verrouillé (V2) à son état déverrouillé (D2).

6. Boitier de commande (10) suivant la revendication 5 **caractérisé en ce qu'**au moins une des deux surfaces, de commande (79) ou d'appui (78), est biseautée suivant un plan incliné (88) sensiblement à 45° par rapport à l'axe de montage (Z), et **en ce que** le bras souple (80) est guidé dans un plan de verrouillage (P3) sensiblement orthogonal à l'axe de montage (Z).

7. Boitier de commande (10) suivant une quelconque des revendications précédentes prise en combinaison avec la revendication 3 **caractérisé en ce que** le dispositif de verrouillage (28) comprend une platine (68) qui porte l'ergot d'encliquetage (76) et **en ce que** l'élément élastique est un bras souple (80) comprend une première extrémité (82) liée à la platine (68) et une seconde extrémité (84) liée au second panneau (14), la platine (68) l'ergot d'encliquetage (76) le bras souple (80) et la surface d'appui (78) étant réalisés d'une seule pièce.

8. Boitier de commande (10) suivant une quelconque des revendications 4 à 6 prise en combinaison avec la revendication 2 **caractérisé en ce que** l'élément élastique est une lame élastique (44) comportant une première extrémité (46) fixée au second panneau et une seconde extrémité (48) libre, et **en ce que** l'ergot d'encliquetage (50) agencé sur la lame élastique (44), et **en ce que** la surface de commande est une surface biseautée (61) coopérant directement avec la lame élastique (44), la coopération résultant, dans le plan de verrouillage (P1), en une flexion de la lame (44) et un déplacement de la seconde extrémité (48) entraînant une commutation d'états (V1, D1).

9. Boitier de commande (10) suivant la revendication 8 **caractérisé en ce que** la lame élastique (44) et l'ergot d'encliquetage (50) sont réalisés d'une seule pièce avec le premier panneau.

10. Boitier de commande (10) suivant une quelconque des revendications précédentes **caractérisé en ce que** le premier panneau (12) est pourvu d'un premier dispositif de verrouillage (26), immobilisant le premier arbre (18), et d'un premier dispositif de déverrouillage (30) et **en ce que**, le second panneau (14) est pourvu d'un second dispositif de verrouillage (28), immobilisant le second arbre (20), et d'un second dispositif de déverrouillage (28) et **en ce que**, lors de l'assemblage du boitier, le premier arbre (18) est libéré par le second dispositif de déverrouillage (28) alors que le second arbre (20) est libéré par le premier dispositif de déverrouillage (30).

11. Boitier de commande (10) suivant une quelconque des revendications précédentes **caractérisé en ce que** le second panneau (14) comprend une molette (24) liée en rotation au second arbre (26).

## Claims

1. Control box (10), in particular for a vehicle air-conditioning system including a first panel (12) and a second panel (14) being assembled along a first assembly axis (Z) the first panel being provided with a first shaft (18) the second panel (14) being provided with a second shaft (20) the first shaft (18) and the second shaft (20) being, after assembly of the first panel (12) and of the second panel (14), attached in rotation, **characterised in that**
the second panel (14) is provided with a locking device (26, 28) immobilising in a locked state (V1, V2) before and after assembly, the second shaft (20) in a determined angular position, the locking device (26, 28) being able to be switched to an unlocked state (D1, D2) in which the second shaft (20) is released, and **in that**
the first panel (12) is provided with an unlocking device (30, 32) co-operating with the locking device (26, 28) in order to switch it from the locked state (V1, V2) to the unlocked state (D1, D2), the cooperation taking place on assembly of the first panel (12) and of the second panel (14).

2. Control box (10) according to claim 1 **characterised in that** the locking device (26, 28) includes a pawl-motion lug (50, 76) elastically biased by an elastic element (44, 80) to the locked state (V1, V2) in which the pawl-motion lug (50, 76) is engaged in a suitable housing (52, 70) of the second shaft (20) to immobilise it.

3. Control box (10) according to claim 2 **characterised in that** the pawl-motion lug (76) is mounted, relative to the second panel (14), for a first rotation (R1) about a locking axis (A3) substantially parallel with the assembly axis (Z), between a first angular locking position and a second angular unlocking position these positions corresponding respectively to the locking (V2) and unlocking (D2) states of the locking device (28).

4. Control box (10) according to any one of claims 2 or 3 **characterised in that** the elastic element is an elongate flexible arm (80) which works in flexion relative to the second panel (14) in a plane substantially at right angles to the assembly axis (Z).

5. Control box (10) according to any one of the preceding claims **characterised in that** the unlocking device is a first cam (30) provided with a control surface (79) which is provided to co-operate with an associated bearing surface (78) of the locking device (28) in order to switch the locking device (28) from its locked state (V2) to its unlocked state (D2).

6. Control box (10) according to claim 5 **characterised in that** at least one of the two, control (79) or bearing (78), surfaces is bevelled in a plane (88) inclined at approximately 45° relative to the assembly axis (Z), and **in that** the flexible arm (80) is guided in a locking plane (P3) substantially at right angles to the assembly axis (Z).

7. Control box (10) according to any one of the preceding claims taken in combination with claim 3 **characterised in that** the locking device (28) includes a plate (68) which bears the pawl-motion lug (76) and **in that** the elastic element is a flexible arm (80) includes a first end (82) attached to the plate (68) and a second end (84) attached to the second panel (14), the plate (68) the pawl-motion lug (76) the flexible arm (80) and the bearing surface (78) being made in one piece.

8. Control box (10) according to any one of claims 4 to 6 taken in combination with claim 2 **characterised in that** the elastic element is an elastic strip (44) comprising a first end (46) fixed to the second panel and a free second end (48), and **in that** the pawl-motion lug (50) arranged on the elastic strip (44), and **in that** the control surface is a bevelled surface (61) co-operating directly with the elastic strip (44), the cooperation resulting, in the locking plane (P1), in a flexing of the strip (44) and a displacement of the second end (48) causing a switching of states (V1, D1).

9. Control box (10) according to claim 8 **characterised in that** the elastic strip (44) and the pawl-motion lug (50) are made in one piece with the first panel.

10. Control box (10) according to any one of the preceding claims **characterised in that** the first panel (12) is provided with a first locking device (26), immobilising the first shaft (18), and a with a first unlocking device (30) and **in that**, the second panel (14) is provided with a second locking device (28), immobilising the second shaft (20), and with a second unlocking device (28) and **in that**, on assembly of the box, the first shaft (18) is released by the second unlocking device (28) while the second shaft (20) is released by the first unlocking device (30).

11. Control box (10) according to any one of the preceding claims **characterised in that** the second panel (14) includes a knurled wheel (24) attached in rotation to the second shaft (26).

## Patentansprüche

1. Schaltgehäuse (10), insbesondere für eine Fahrzeugklimaanlage, das eine erste Platte (12) und eine zweite Platte (14) umfasst, die entlang einer Montageachse (Z) zusammengefügt sind, wobei die erste Platte mit einer ersten Welle (18) ausgestattet ist, wobei die zweite Platte (14) mit einer zweiten Welle (20) ausgestattet ist, wobei die erste Welle (18) und die zweite Welle (20) nach dem Zusammenfügen der ersten Platte (12) und der zweiten Platte (14) in Drehverbindung sind, **dadurch gekennzeichnet, dass**
die erste Platte (14) mit einer Verriegelungsvorrichtung (26, 28) versehen ist, die die zweite Welle (20) vor dem und während des Zusammenfügen(s) in einem Verriegelungszustand (V1, V2) in einer bestimmten Winkelposition arretiert, wobei die Verriegelungsvorrichtung (26, 28) in einen Entriegelungszustand (D1, D2) geschaltet werden kann, in dem die zweite Welle (20) frei ist, und dadurch, dass
die erste Platte (12) mit einer Entriegelungsvorrichtung (30, 32) versehen ist, die mit der Verriegelungsvorrichtung (26, 28) zusammenwirkt, um zu bewirken, dass sie vom Verriegelungszustand (V1, V2) in den Entriegelungszustand (D1, D2) geschaltet wird, wobei die Zusammenwirkung beim Zusammenfügen der ersten Platte (12) und der zweiten Platte (14) erfolgt.

2. Schaltgehäuse (10) nach Anspruch 1, **dadurch gekennzeichnet, dass** die Verriegelungsvorrichtung (26, 28) eine Sperrklinke (50, 76) umfasst, die von einem elastischen Element (44, 80) elastisch in den Verriegelungszustand (V1, V2) gedrückt wird, in dem die Sperrklinke (50, 76) in eine geeignete Aufnahme (52, 70) der zweiten Welle (20) eingreift, um sie zu arretieren.

3. Schaltgehäuse (10) nach Anspruch 2, **dadurch gekennzeichnet, dass** die Sperrklinke (76) in Bezug auf die zweite Platte (14) gemäß einer ersten Rotation (R1) um eine Verriegelungsachse (A3) im Wesentlichen parallel zur Montageachse (Z) zwischen einer ersten Verriegelungswinkelposition und einer zweiten Entriegelungswinkelposition montiert ist, die jeweils dem Verriegelungszustand (V2) und dem Entriegelungszustand (D2) der Verriegelungsvorrichtung (28) entsprechen.

4. Schaltgehäuse (10) nach Anspruch 2 oder 3, **dadurch gekennzeichnet, dass** das elastische Element ein verlängerter flexibler Arm (80) ist, der durch Biegen in Bezug auf die zweite Platte (14) in einer Ebene im Wesentlichen lotrecht zur Montageachse (Z) arbeitet.

5. Schaltgehäuse (10) nach einem der vorherigen Ansprüche, **dadurch gekennzeichnet, dass** die Entriegelungsvorrichtung eine erste Nocke (30) ist, die mit einer Schaltfläche (79) versehen ist, die vorgesehen ist, um mit einer mit der Verriegelungsvorrichtung (28) assoziierten Abstützfläche (78) zusammenzuwirken, so dass die Verriegelungsvorrichtung (28) von ihrem Verriegelungszustand (V2) in ihren Entriegelungszustand (D2) geschaltet wird.

6. Schaltgehäuse (10) nach Anspruch 5, **dadurch gekennzeichnet, dass** wenigstens eine der beiden Flächen, die Schaltfläche (79) oder die Abstützfläche (78), in einer geneigten Ebene (88) von im Wesentlichen 45° in Bezug auf die Montageachse (Z) abgeschrägt ist, und dadurch, dass der flexible Arm (80) in einer Verriegelungsebene (P3) im Wesentlichen orthogonal zur Montageachse (Z) geführt wird.

7. Schaltgehäuse (10) nach einem der vorherigen Ansprüche in Kombination mit Anspruch 3, **dadurch gekennzeichnet, dass** die Verriegelungsvorrichtung (28) eine Platine (68) umfasst, die eine Sperrklinke (76) trägt, und dadurch, dass das elastische Element ein flexibler Arm (80) mit einem ersten, mit der Platine (68) verbundenen Ende (82) und einem zweiten, mit der zweiten Platte (14) verbundenen Ende (84) ist, wobei die Platine (68), die Sperrklinke (76), der flexible Arm (80) und die Abstützfläche (78) aus einem einzigen Stück gefertigt sind.

8. Schaltgehäuse (10) nach einem der Ansprüche 4 bis 6 in Kombination mit Anspruch 2, **dadurch gekennzeichnet, dass** das elastische Element ein federnder Stab (44) mit einem an der zweiten Platte befestigten ersten Ende (46) und einem freien zweiten Ende (48) umfasst, und dadurch, dass die Sperrklinke (50) auf dem federnden Stab (44) angeordnet ist, und dadurch, dass die Schaltfläche eine abschrägte Fläche (61) ist, die direkt mit dem federnden Stab (44) zusammenwirkt, wobei die Zusammenwirkung in der Verriegelungsebene (P1) zu einer Biegung des Stabs (44) und einer Verschiebung des zweiten Endes (48) führt, was einen Wechsel der Zustände (V1, D1) zur Folge hat.

9. Schaltgehäuse (10) nach Anspruch 8, **dadurch gekennzeichnet, dass** der federnde Stab (44) und die Sperrklinke (50) aus einem einzigen Stück mit der ersten Platte gefertigt sind.

10. Schaltgehäuse (10) nach einem der vorherigen Ansprüche, **dadurch gekennzeichnet, dass** die erste Platte (12) mit einer ersten, die erste Welle (18) arretierenden Verriegelungsvorrichtung (26) und einer ersten Entriegelungsvorrichtung (30)versehen ist, und dadurch, dass die zweite Platte (14) mit einer zweiten, die zweite Welle (20) arretierenden Verriegelungsvorrichtung (28) und mit einer zweiten Entriegelungsvorrichtung (28) versehen ist, und dadurch, dass bei der Montage des Gehäuses die erste Welle (18) von der zweiten Entriegelungsvorrichtung (28) freigegeben wird, wenn die zweite Welle (20) von der ersten Entriegelungsvorrichtung (30) freigegeben wird.

11. Schaltgehäuse (10) nach einem der vorherigen Ansprüche, **dadurch gekennzeichnet, dass** die zweite Platte (14) ein Rad (24) umfasst, das mit der zweiten Welle (26) rotatorisch verbunden ist.
